# EUROPEAN PATENT SPECIFICATION

(11) **EP 3 367 625 B1**
(45) Date of publication and mention of the grant of the patent: **12.06.2019**
(21) Application number: 17157789.3
(22) Date of filing: 24.02.2017
(51) Int. Cl.: H04L 29/06, H04L 29/08

(54) **A METHOD OF COMMUNICATION BETWEEN TWO RAILWAY SIGNALLING ENTITIES**
KOMMUNIKATIONSVERFAHREN ZWISCHEN ZWEI EISENBAHNSIGNALISIERUNGSEINHEITEN
PROCÉDÉ DE COMMUNICATION ENTRE DEUX ENTITÉS DE SIGNALISATION DE CHEMIN DE FER

(43) Date of publication of application: 29.08.2018
(73) Proprietor: Kapsch CarrierCom AG, 1120 Wien (AT)
(72) Inventor: GRUET, Christophe, 78180 Montigny le Bretonneux (FR); BEICHT, Peter, 88682 Salem (DE); KERNSTOCK, Karl, 3652 Leiben (AT)
(74) Representative: Weiser & Voith Patentanwälte Partnerschaft

(56) References cited:
- "3rd Generation Partnership Project; Technical Specification Group Services and System Aspects; Functional architecture and information flows to support Mission Critical Data (MCData); Stage 2 (Release 14)", 3GPP STANDARD; 3GPP TS 23.282, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. V14.0.0, 19 December 2016 (2016-12-19), pages 1-70, XP051230177, [retrieved on 2016-12-19]
- "3rd Generation Partnership Project; Technical Specification Group Services and System Aspects; Common functional architecture to support mission critical services; Stage 2 (Release 14)", 3GPP DRAFT; 23280-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 December 2016 (2016-12-06), XP051187030, Retrieved from the Internet: URL:http://www.3gpp.org/ftp/Meetings_3GPP_ SYNC/SA/Docs/ [retrieved on 2016-12-06]

## Description

The present invention relates to a method of TCP, UDP or SCTP communication between two railway signalling entities over a wireless network according to a 3GPP LTE standard.

Railway signalling systems such as CBTC (Communications Based Train Control) or ETCS (European Train Control System) are used for signalling, control and protection of trains and trackside equipment. In the past those systems relied on dedicated wireless networks such as TETRA (Terrestrial Trunked Radio), GSM-R (Global System for Mobile Telecommunications - Rail) or WLANs (Wireless Local Area Networks) as low latency and high availability are mission critical for safety and operability concerns.

To exploit the high-speed data transmission capabilities of modern general broadband wireless standards such as LTE (Long Term Evolution) of the 3GPP (3rd Generation Partnership Project) standard, recent efforts have been made to standardise mission critical data (MCData) services, see, e.g., 3GPP technical specification (TS) 23.282.

MCData services utilise the common functional architecture defined in 3GPP TS 23.280 to support mission critical (MC) services over LTE, and are one of three MC services defined in LTE: MCPTT (MC push-to-talk) for mission critical voice communications, MCVideo for mission critical video pull and push functionalities, and MCData for mission critical data services. MCData services comprise a suite of four services: SDS (Short Data Service) messaging services, FD (File Distribution) services, DS (data streaming) services and IC (IP connectivity) services, see 3GPP TS 23.282.

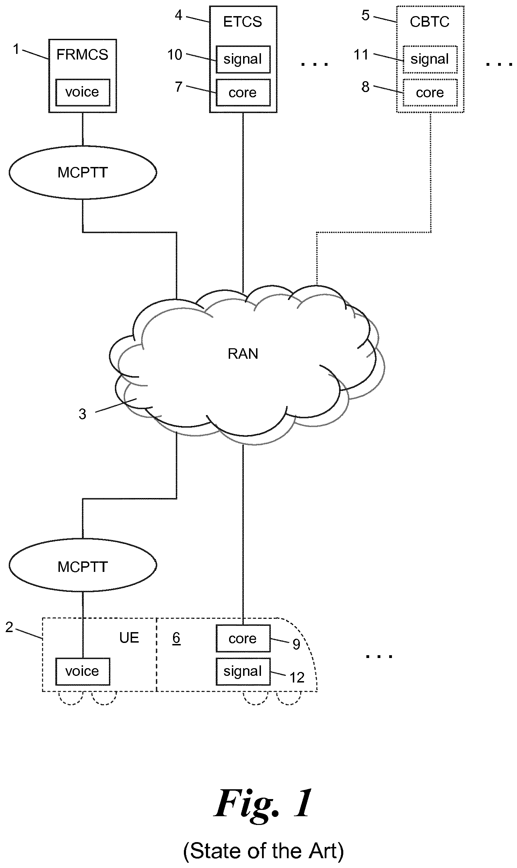

Fig. 1 shows an example of how MC services are currently employed in a railway signalling environment according to the state of the art. MCPTT services are used to implement mission critical voice communications between, e.g., an FRMCS (Future Railway Mobile Communication System) 1 and an LTE user entity (UE) aboard a train 2 over an LTE MC-enabled radio access network (RAN) 3.

Exemplary ETCS or CBTC railway signalling servers 4, 5 use internet protocol (IP) connectivity services provided by the wireless network 3 to communicate with a signalling client 6 aboard the train 2. Those IP services typically comprise TCP (Transmission Control Protocol), UDP (User Datagram Protocol) or SCTP (Stream Control Transmission Protocol) communications.

As shown in Fig. 1, the signalling servers 4, 5 and clients 6 are standalone systems, sharing only the wireless network 3 with the MCPTT voice communication of the communication system 1 and the UE on the train 2, while having their own IP services communication cores 7, 8, 9 for handling authentication, authorisation, security and configuration for their signalling entities (applications) 10, 11, 12. This also applies to scenarios in which most recently standardized MCData IC services of the wireless network 3 are used.

It is an object of the invention to provide a more efficient, yet highly reliable and low-latency method for IP communications, in particular TCP, UDP or SCTP communications, between two railway signalling entities over a wireless network.

According to the invention this aim is achieved with a method according to claim 1. Further embodiments are set out in the dependent claims.

Instead of generic IP connectivity services of the 3GPP LTE wireless network, the inventive method makes use of the MCData SDS service for tunnelling IP communications in the form of TCP, UDP or SCTP signalling messages over MCData SDS messages. Due to the intrinsic "mission critical" priority of MCData SDS messages in the LTE wireless network, mission critical signalling between the railway signalling entities is fast and efficient. For MCData SDS messages, the MSData server and MCData clients provide all core communication functions such as authentication, authorisation, security and configuration between the communication partners exchanging SDS messages, so that the railway signalling entities are relieved of all those functions. The railway signalling entities, i.e., the railway signalling servers and clients, can thus be reduced to "thin" applications, relying on the core protocols of the MCData SDS server and clients. Furthermore, railway signalling clients and servers can be easily added and/or retro-fitted to the system, without the need to implement additional authentication, authorisation, security and configuration mechanisms on the railway server's or clients' side.

For achieving low latency, the MCData SDS messages are preferably sent in MCData Auto-send mode from the MCData client to the MCData server, and preferably also in MCData Auto-receive mode from the MCData server to the MCData client/s. "Auto-send" is a mechanism in MCData services where data from a sending MCData client is automatically transmitted to the MCData server without requesting permission to transmit, and "Auto-receive" is a mechanism where data is automatically delivered to the receiving MCData client from the MCData server without requiring acceptance for delivery. As defined in 3GPP TS 23.282, Auto-send and Auto-receive modes are possible for transmissions not larger than 1000 bytes. As TCP, UDP or SCTP data packets of railway signalling entities are usually much smaller, this limit does not affect low-latency operation.

In a preferred embodiment, the MCData SDS message is sent in a private call mode from the first MCData client to the second MCData client. Alternatively, the MCData SDS message could also be sent in a group call mode to a plurality of second MCData clients, if required.

With the inventive method, redundancy strategies for highly fail-safe railway signalling systems can be easily implemented. To this end, a first preferred embodiment of the method of the invention further comprises:
configuring a further first MCData client for the first signalling entity and registering the further first MCData client with the MCData server for MCData SDS transfer;
configuring a further second MCData client for the second signalling entity and registering the further second MCData client with the MCData server for MCData SDS transfer;
receiving the signalling message from the first signalling entity also in the further first MCData client;
in the further first MCData client, wrapping the signalling message in a further MCData SDS message;
sending the further MCData SDS message from the further first MCData client to the further second MCData client via the MCData server;
if either of the two MCData SDS messages has failed to be received in the respective second MCData client, extracting the signalling message from the non-failed MCData SDS message for the sending to the second signalling entity.

Duplicating the message transmission path for the MCData SDS messages achieves redundancy to compensate for potential transmission failures over the wireless network.

While this first embodiment still uses a common MCData server, alternatively also the MCData servers can be duplicated. I.e., in a second preferred embodiment the method of the invention comprises:
configuring a further first MCData client for the first signalling entity and registering the further first MCData client with a further MCData server for MCData SDS transfer;
configuring a further second MCData client for the second signalling entity and registering the further second MCData client with the further MCData server for MCData SDS transfer;
receiving the signalling message from the first signalling entity also in the further first MCData client;
in the further first MCData client, wrapping the signalling message in a further MCData SDS message;
sending the further MCData SDS message from the further first MCData client to the further second MCData client via the further MCData server;
if either of the two MCData SDS messages has failed to be received in the respective second MCData client, extracting the signalling message from the non-failed MCData SDS message for the sending to the second signalling entity.

In both the first and the second embodiment the TCP, UDP or SCTP signalling message to transmit can be duplicated in the sending signalling entity for feeding to both first MCData clients. To this end, in case of a TCP signalling message the message can be duplicated by sending as a multipath TCP (MPTCP) message, in case of a UDP message as a multipath UDP (MPUDP) message, or in case of an SCDP message as a multipath SCTP (MPSCTP) message.

In a further alternative embodiment, redundancy can be implemented by means of group calls handled in the MCData SDS system. To this end, a third preferred embodiment of the method of the invention comprises:
configuring a further first MCData client for the first signalling entity and registering the further first MCData client with the MCData server for MCData SDS transfer;
configuring a further second MCData client for the second signalling entity and registering the further second MCData client with the MCData server for MCData SDS transfer;
defining a group containing both second MCData clients as members;
wherein the MCData SDS message is sent in a group call mode to all members of the group.

Redundancy can be further enhanced when the group additionally comprises both first MCData clients as members so that, upon receiving the MCData SDS message in the further first MCData client, the MCData SDS message is re-sent in a group call mode to all members of the group.

In any of those cases, when duplicate signalling messages are received, removing of duplicates can be handled at the level of that railway signalling entities that receive such duplicate messages. Alternatively, and preferably, unnecessary duplicates of MCData SDS messages can be avoided by restricting certain group messaging paths between group members in a group call, so that primarily the forwarding paths from both sending MCData SDS clients to both receiving MCData SDS clients are preserved, as will be explained later in detail.

The signalling entities in the method of the invention can be of any kind, e.g., two onboard train controllers exchanging inter-train communications, two trackside equipments, a trackside equipment and a central signalling server, etc. In preferred embodiments, the first signalling entity is an onboard train controller and the second signalling entity is a railwayside signalling server, or vice versa. In those cases only the mobile signalling entity needs to communicate via the wireless network with the MCData server, while the stationary signalling entity can communicate directly over a wirebound datalink with the MCData server.

Exemplary embodiments of the invention will now be described in more detail under reference to the enclosed drawings, in which:
Fig. 1 is an overview diagram of a railway signalling system and method according to the state of the art;
Fig. 2 is an overview diagram of a railway signalling system and method according to the invention;
Fig. 3 is a functional diagram of the application plane model of the MCData SDS service in 3GPP LTE;
Fig. 4 is a block diagram of a first embodiment of a railway signalling communication system and method according to the invention;
Fig. 5 is a data diagram showing the step of wrapping a TCP signalling message in an MCData SDS message; and
Figs. 6, 7 and 8 are block diagrams of further embodiments of the railway signalling system and method of the invention.

As to Fig. 1 which describes the state of the art reference is made to the introduction.

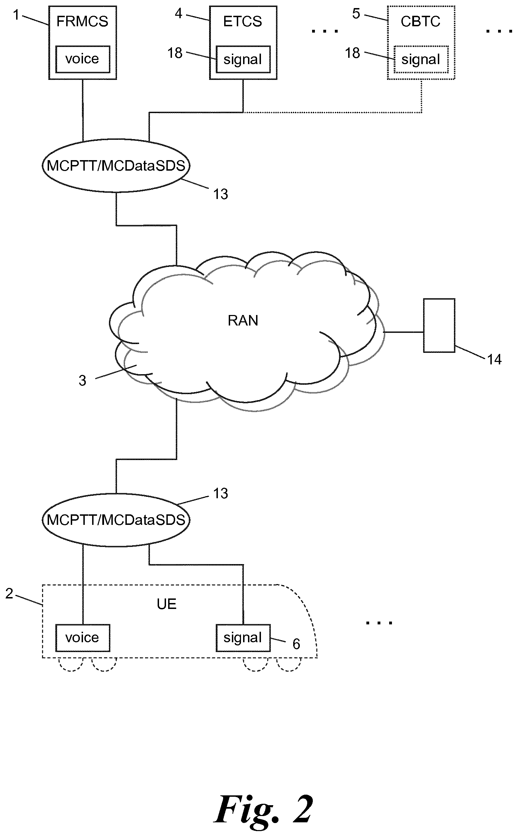

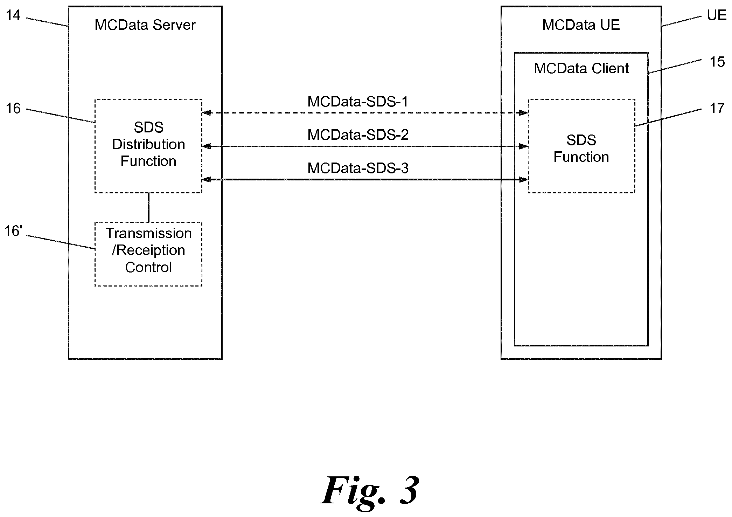

Fig. 2, in which same reference numerals designate same entities as in Fig. 1, shows the use of an MCData SDS tunnel 13 for signalling between the railway signalling servers 4, 5 and the exemplary train 2 with its user entity UE over the wireless network 3. An MCData server 14 for handling MCData services is attached to the wireless network 3. The wireless network 3 is a 3GPP LTE network providing MCData SDS services according to 3GPP TS 23.282, the basic application plane functional model of which is depicted in Fig. 3 for the MCData server 14 and an exemplary MCData client 15 hosted by the user entity UE.

As shown in Fig. 3, according to section 6.5.1-1 of TS 23.282 for the on-network functional model, MCData-SDS-1 reference point is used for uplink and downlink unicast SDS data transactions over the signalling control plane by SDS distribution function 16 of MCData server 14 and SDS function 17 of MCData client 15. This reference point is also used for MCData application signalling during session establishment in support of SDS data transfer. MCData-SDS-2 reference point carries uplink and downlink unicast SDS data over media plane between SDS distribution function 16 of MCData server 14 and SDS function 17 of MCData client 15. MCData-SDS-3 reference point carries downlink multicast SDS data over media plane from SDS distribution function 16 of MCData server 14 to SDS function 17 of MCData client 15.

SDS distribution function 16 of MCData server 14 is responsible for SDS data transactions to MCData communication participants. SDS distribution function 16 provides the following functionality:
- reception of uplink SDS data transactions by means of the MCData-SDS-2 reference point;
- replication of SDS data as needed for distribution to those MCData communication participants which use unicast transport;
- distribution of downlink data by IP unicast transmissions to those MCData communication participants which use unicast transport by means of MCData-SDS-2 reference point; and
- distribution of downlink SDS data using multicast downlink transport by means of MCData-SDS-3 reference point.

Transmission/Reception control 16' is responsible for transmission and reception control of MCData SDS data transactions between sending MCData client, MCData server, and receiving MCData client. For SDS capability, transmission/reception control 16' is "Auto-send" and "Auto-receive" as described before.

For MCData SDS communications, the MCData server 14 thus provides all core functions necessary for authentication, authorisation, security, configuration and identity of any MCData clients 15 (or 15ₐ, 15_{b}, 21, 21a, 21b described later on) attached (registered) therewith.

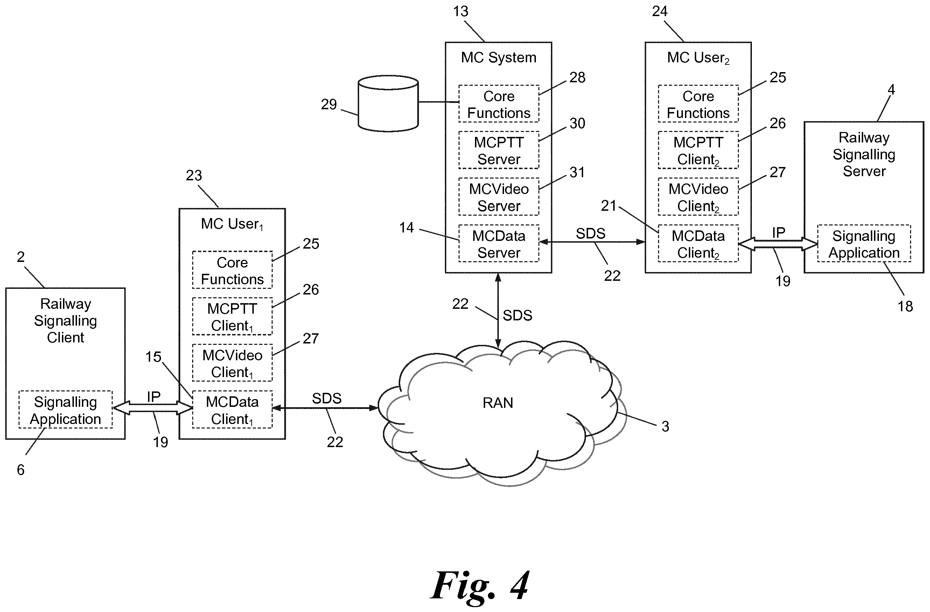

This is shown in Fig. 4 in more detail. Fig. 4 shows a communication scenario between two railway signalling entities, here an exemplary ETCS railway signalling server 4 and an exemplary railway signalling client 2. The railway signalling server 4 contains a signalling application 18 which requires IP connectivity with a signalling application 6 of the railway signalling client 2. In particular, the IP communication between the railway signalling entities 6 and 18 is comprised of signalling messages 19 in the form of TCP (Transmission Control Protocol) messages according to standard RFC 793 (or similar), UDP (User Datagram Protocol) messages according to standard RFC 768 (or similar) and/or SCTP (Stream Control Transmission Protocol) messages according to standard RFC 4960 (or similar).

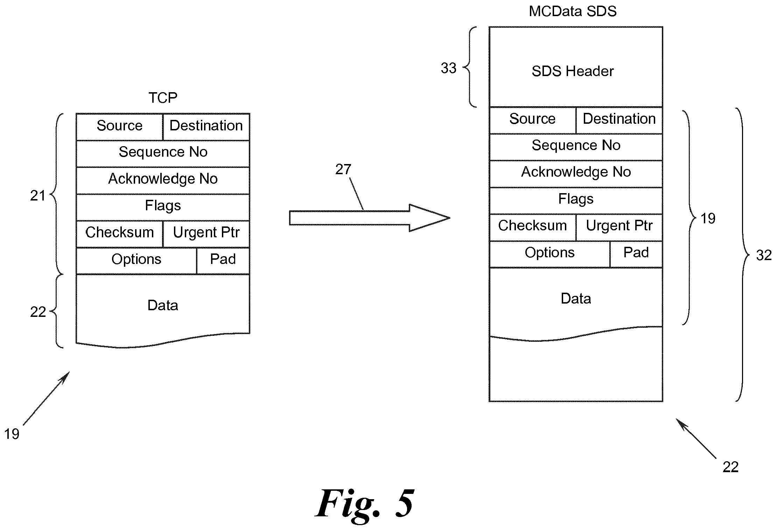

An example of a TCP signalling message 19 is shown in the left half of Fig. 5. The TCP signalling message 19 is comprised of a TCP header 21 and payload data 22. For further details of the TCP structure reference is made to RFC 793, and to RFC 768 and RFC 4960, respectively, for comparable UDP and SCTP structures.

Returning to Fig. 4, for each signalling entity, here the applications 6, 18, an MCData client 15, 21 is configured and registered with the MCData server 14 of the MC system 13 of the 3GPP LTE wireless network 3. The registration model (application plane) of the configuration and registration of the respective MCData client 15, 21 with the MCData server 14 is as shown in Fig. 3. The MCData clients 15, 21 and the MCData server 14 are each configured for MCData SDS communications so that they can exchange MCData SDS messages 22 with each other via the MCData server 14.

The MCData clients 15, 21 can each be part of an MC user entity (UE) 23, 24 which contains all LTE core functions 25 necessary for LTE communication over the wireless network 3, as well as any further MC services such as an exemplary MCPTT client 26 and an exemplary MCVideo client 27, if needed. Of course, MCPTT and MCVideo clients 26, 27 are optional and not necessary for the operation of the communication method described herein.

To complete the setup, the MC system 13 of the wireless network 3 comprises network-side LTE core functions 28, including a user database 29 for MCData users, as well as (optionally) an MCPTT server 30 and an MCVideo server 31.

Having configured and registered the MCData clients 15, 21 with the MCData server 14 for MCData SDS transfer, an exemplary TCP, UDP or SCTP communication between one of the railway signalling entities 6, 18 and the other (or vice-versa) is as follows.

The sending signalling entity, here the signalling application 6 of the railway signalling client 2, sends a signalling message 19, e.g., a TCP data packet (Fig. 5), to its MCData client 15. In the present example, the MCData client 15 is part of the MC user 23 hosted by the user entity UE within the train 2.

The MCData client 17 wraps the received signalling message 19 in an MCData message 22 shown in the right half of Fig. 5. The step of wrapping (packing) the signalling message 19 into the MCData SDS message 22 is schematically depicted by the arrow 27. Of course, if the signalling message 19 is in UDP or SCTP format, it would be wrapped in the same way into the MCData SDS message 22. Furthermore, any of the TCP, UDP or SCTP signal messages 19 could be transported in an enveloping IP data packet and would, as such, be packed into the MCData SDS message 22.

In general, the signalling message 19 is inserted into a payload part 32 of the MCData SDS message 22, complemented by an SDS header 33, i.e. SDS header 33 and payload part 32 carrying the signalling message 19 make up the MCData SDS message 22. Of course, the signalling message 19 could be put elsewhere into the MCData SDS message 22, depending on the actual MCData SDS message format employed in the specific 3GPP LTE implementation used in the wireless network 3.

For enabling Auto-send and Auto-receive modes in SDS transfer according to TS 23.282, the lengths of the MCData SDS message 22 is usually kept below 1000 bytes, which is sufficient to carry signalling messages 19 of currently deployed ETCS or CBTC railway signalling systems.

Returning to Fig. 4, the MCData SDS message 22 carrying (tunnelling) the TCP, UDP or SCTP signalling message 19 is then forwarded in an SDS private (1:1) call mode from the MCData client 15 over the wireless network 3 and the MCData server 14 to the MCData client 24 of the destination (receiving) signalling entity, here, the signalling application 18 of the ETCS railway signalling server 4.

In the receiving MCData client 21 the signalling message 19 is extracted from the received MCData SDS message 22. The extracted signalling message 19 is sent to the final destination signalling entity, here, the signalling application 18.

As shown in Fig. 4, the railway signalling server 4 and its MC user 24 comprising the MCData client 21 may have a permanent or wirebound connection with the MCData server 14 of the MC system 13, while the MCData client 17 of the MC user 23 of the railway signalling client 2 is connected over the wireless network 3 to the MCData server 14. Of course, also the MCData client 21 could be attached to the MCData server 14 over the wireless network 3 or another wireless network, e.g., when it is part of a mobile or far remote signalling entity in the field.

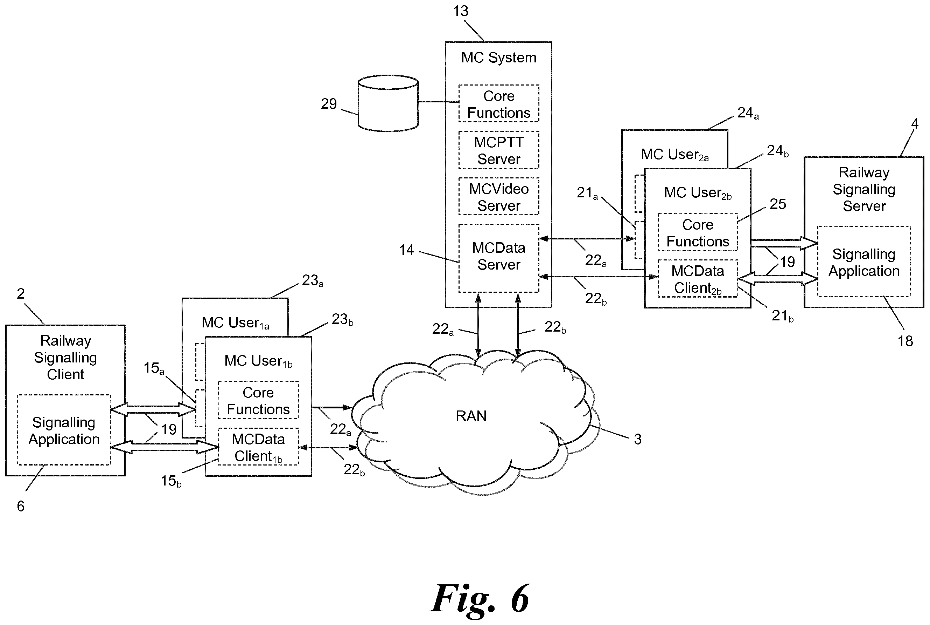

Fig. 6 shows an alternative embodiment of the method of Figs. 4 and 5 using a double message path for redundancy purposes. Here, the signalling message 19 to be sent is duplicated in the sending signalling application 6 and sent to two MCData clients 15ₐ and 15_{b} which have both been configured and registered with the MCData server 14 of the MC system 13 for MCData SDS transfer. In the same way, two MCData clients 21ₐ and 21_{b} have been configured for the receiving signalling entity 18 and registered with the MCData server 14 for MCData SDS transfer.

In each MCData client 17ₐ, 17_{b} the received signalling message 19 is wrapped (27) into a separate MCData SDS message 22ₐ, 22_{b}. Each of the two MCData SDS messages 22ₐ, 22_{b} is sent via the wireless network 3 and the MCData server 14 - in a private call mode - to one of the MCData clients 21ₐ, 21_{b}. That is, the first MCData SDS message 22ₐ is sent from the one MCData client 17ₐ to the one MCData client 21ₐ, and the further MCData SDS message 22_{b} is sent from the other MCData client 17ₐ to the other receiving MCData client 21_{b}.

In each of the receiving MCData clients 21ₐ, 21_{b} the original TCP, UDP or SCTP signalling message 19 is extracted from the received MCData SDS message 22ₐ, 22_{b} and sent to the receiving signalling entity 18. For redundancy and error-correction purposes the signalling entity 18 can cross-check the received two signalling messages 19 against each other, or, in case of a communication failure of one of the MCData SDS messages 22ₐ, 22_{b} or one of the signalling messages 19, use the non-failed (surviving) signalling message 19.

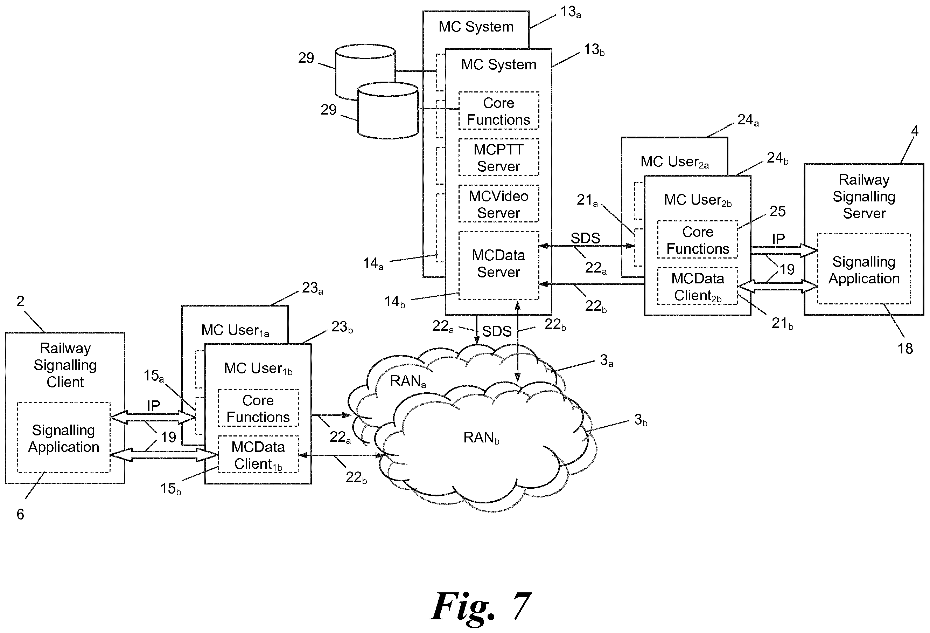

While in the embodiment of Fig. 6 a common wireless network 3 has been used for transmitting both MCData SDS messages 22ₐ, 22_{b}, these could also be sent over different wireless networks 3ₐ, 3_{b}, as is shown in the embodiment of Fig. 7.

According to Fig. 7, not only the wireless network 3 can be separated into two different wireless networks 3ₐ, 3_{b}, but also the MCData server 14 can be duplicated so that each wireless network 3ₐ, 3_{b} uses its own MCData server 14ₐ, 14_{b}. In this way, the message paths for the two MCData SDS messages 22ₐ, 22_{b} are completely separated for redundancy.

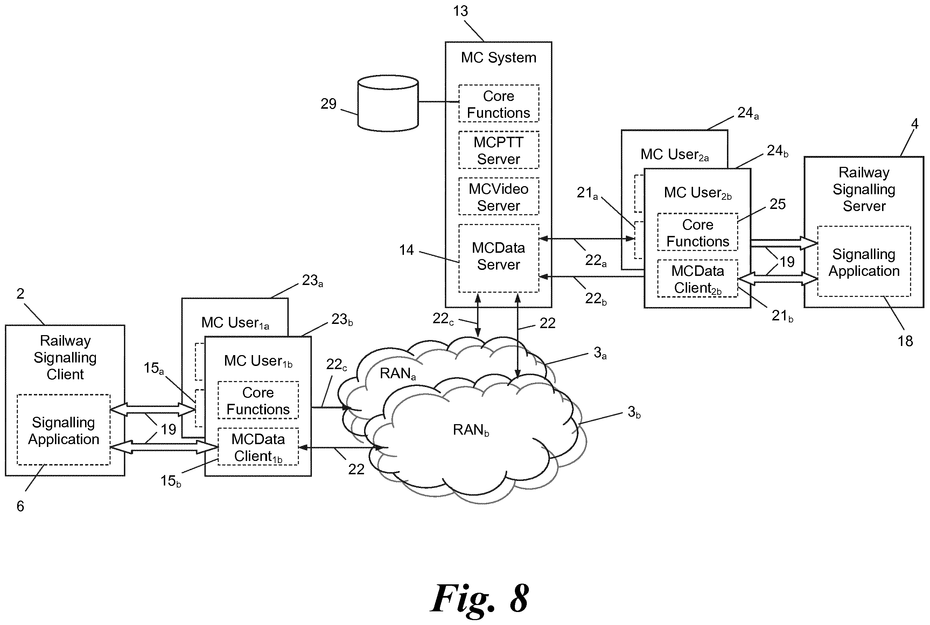

Fig. 8 shows a further embodiment which uses MCData group calls for establishing redundant communications. Again, for each signalling entity 6, 18 duplicate MCData clients 15ₐ, 15_{b} and 21ₐ, 21_{b}, respectively, have been configured and registered with the common MCData server 14 (or with separate MCData servers 14ₐ, 14_{b}) for MCData SDS transfer over the wireless network 3 (or the wireless networks 3ₐ, 3_{b}). Message duplication is initiated by the first MCData client 15ₐ which receives the signalling message 19 from the sending signalling entity 6 in that a group call (1:n call) is set up from the MCData client 15ₐ to a group comprising at least both receiving MCData clients 21ₐ, 21_{b}.

As in group calls the duplication of the MCData SDS message 22 to the MCData SDS messages 22ₐ, 22_{b} usually happens at the level of the MCData server 14, redundancy can be further enhanced if the group of the MCData SDS group call also comprises one or both first MCData clients 15ₐ, 15_{b}. In this way, the MCData server 14 reflects a received MCData SDS message 22 back to one or both of the first MCData clients 15ₐ, 15_{b}, see SDS message 22_{c}. Any MCData client, here the MCData client 15_{b} receiving such an MCData SDS message 22_{c} from the MCData server 14, may be configured to re-send such a received MCData SDS message 22_{c} in a further group (1:n) call to all other members 15ₐ, 15_{b}, 21ₐ, 21_{b} of the group, thus "flooding" the system with redundant MCData SDS messages.

To avoid undue flooding and unnecessary traffic, group calls in the MC system may be re-configured so that certain connections within a group call are suppressed, such as the sending of an MCData SDS message from 15ₐ to 15_{b}, 15_{b} to 15ₐ, 21ₐ to 21_{b}, 21_{b} to 21ₐ, 15ₐ to 21_{b}, 21_{b} to 15ₐ, 21ₐ to 15_{b} and 15_{b} to 21ₐ. Thus, only absolutely necessary double communication paths are retained for redundancy.

In any of those embodiments, the destination signalling entity, here the signalling application 18, may receive one or two extracted signalling messages 19 from either one or both of the MCData clients 21ₐ, 21_{b}, and cross-check them and/or use the non-failed one. Alternatively, the receiving MCData clients 21ₐ, 21_{b} can be interlinked and negotiate which one of the received MCData SDS messages 22ₐ, 22_{b} is to be used for extraction of the signalling message 19. In case of a communication failure on one of the duplicate communication paths for the MCData SDS messages 22, 22ₐ, 22_{b}, 22_{c}, of course, only the non-failed MCData SDS messages will be used for signalling message extraction.

The invention is not restricted to the specific embodiments disclosed herein but encompasses all variants, modifications and combinations thereof which fall into the scope of the appended claims.

## Claims

1. A method of Transmission Control Protocol, TCP, User Datagram Protocol, UDP, or Stream Control Transmission Protocol, SCTP, communication between two railway signalling entities (6, 18) over a wireless network (3) which provides Mission Critical Data, MCData, services according to a 3GPP LTE standard that provides such MCData services, comprising:
configuring a first MCData client (15, 15ₐ) for the first signalling entity (6) and registering the first MCData client (15, 15ₐ) with an MCData server (14, 14ₐ) of the wireless network (3) for MCData Short Data Services, SDS, transfer;
configuring a second MCData client (21, 21ₐ) for the second signalling entity (18) and registering the second MCData client (21, 21ₐ) with the MCData server (14, 14ₐ) for MCData SDS transfer;
receiving a signalling message (19) transmitted over TCP, UDP or SCTP from the first signalling entity (6) in the first MCData client (15, 15ₐ);
in the first MCData client (15, 15ₐ), wrapping the signalling message (19) in an MCData SDS message (22, 22ₐ);
sending the MCData SDS message (22, 22ₐ) from the first MCData client (15, 15ₐ) to the second MCData client (21, 21ₐ) via the MCData server (14, 14ₐ);
extracting the signalling message (19) from the MCData SDS message (22, 22ₐ) in the second MCData client (21, 21ₐ); and
sending the signalling message (19) to the second signalling entity (18).

2. The method according to claim 1, wherein the MCData SDS message (22) is sent in MCData Auto-send mode from the first MCData client (15, 15ₐ) to the MCData server (14, 14ₐ).

3. The method according to claim 1 or 2, wherein the MCData SDS message (22, 22ₐ) is sent in MCData Auto-receive mode from the MCData server (14, 14ₐ) to the second MCData client (21, 21ₐ).

4. The method according to any one of the claims 1 to 3, wherein the MCData SDS message (22, 22ₐ) is sent in a private call mode.

5. The method according to any one of the claims 1 to 3, wherein the MCData SDS message (22) is sent in a group call mode to a plurality of second MCData clients (21ₐ, 21_{b}).

6. The method according to any one of the claims 1 to 4, comprising:
configuring a further first MCData client (15_{b}) for the first signalling entity (6) and registering the further first MCData client (15_{b}) with the MCData server (14) for MCData SDS transfer;
configuring a further second MCData client (21_{b}) for the second signalling entity (18) and registering the further second MCData client (21_{b}) with the MCData server (14) for MCData SDS transfer;
receiving the signalling message (19) from the first signalling entity (6) also in the further first MCData client (15_{b}) ;
in the further first MCData client (15_{b}), wrapping the signalling message (19) in a further MCData SDS message (22_{b});
sending the further MCData SDS message (22_{b}) from the further first MCData client (15_{b}) to the further second MCData client (22_{b}) via the MCData server (14);
if either of the two MCData SDS messages (22ₐ, 22_{b}) has failed to be received in the respective second MCData client (21ₐ, 21_{b}), extracting the signalling message (19) from the non-failed MCData SDS message (22ₐ, 22_{b}) for the sending to the second signalling entity (21_{b}).

7. The method according to any one of the claims 1 to 4, comprising:
configuring a further first MCData client (15_{b}) for the first signalling entity (6) and registering the further first MCData client (15_{b}) with a further MCData server (14_{b}) for MCData SDS transfer;
configuring a further second MCData client (21_{b}) for the second signalling entity (18) and registering the further second MCData client (21_{b}) with the further MCData server (14_{b}) for MCData SDS transfer;
receiving the signalling message (19) from the first signalling entity (6) also in the further first MCData client (15_{b}) ;
in the further first MCData client (15_{b}), wrapping the signalling message (19) in a further MCData SDS message (22_{b});
sending the further MCData SDS message (22_{b}) from the further first MCData client (15_{b}) to the further second MCData client (21_{b}) via the further MCData server (14_{b});
if either of the two MCData SDS messages (22ₐ, 22_{b}) has failed to be received in the respective second MCData client (21ₐ, 21_{b}), extracting the signalling message (19) from the non-failed MCData SDS message (22ₐ, 22_{b}) for the sending to the second signalling entity (18).

8. The method of claim 6 or 7, wherein the signalling message (19) is duplicated in the first signalling entity (6) for sending it to both first MCData clients (15ₐ, 15_{b}).

9. The method of claim 8, wherein the TCP, UDP or SCTP signalling message (19) is duplicated according to an MPTCP, MPUDP or MPSCTP standard, respectively.

10. The method according to any one of the claims 1 to 3, comprising:
configuring a further first MCData client (15_{b}) for the first signalling entity (6) and registering the further first MCData client (15_{b}) with the MCData server (14, 14_{b}) for MCData SDS transfer;
configuring a further second MCData client (21_{b}) for the second signalling entity (18) and registering the further second MCData client (21_{b}) with the MCData server (14, 14_{b}) for MCData SDS transfer;
defining a group containing both second MCData clients (21ₐ, 21_{b}) as members;
wherein the MCData SDS message (22) is sent in a group call mode to all members of the group.

11. The method of claim 10, wherein the group also contains both first MCData clients (15ₐ, 15_{b}) as members and wherein, upon receiving the MCData SDS message (22) in the further first MCData client (15_{b}), the MCData SDS message (22) is re-sent in a group call mode to all members of the group.

12. The method of any of the claims 1 to 11, wherein the first signalling entity (6) is an onboard train controller and the second signalling entity (18) is a railwayside signalling server, or vice versa.

## Patentansprüche

1. Verfahren einer Transmission Control Protocol-, TCP, User Datagram Protocol-, UDP, oder Stream Control Transmission-Protocol-, SCTP, -Kommunikation zwischen zwei Eisenbahnsignalisierungseinheiten (6, 18) über ein Drahtlosnetzwerk (3), welches Mission Critical Data-, MCData, -Dienste gemäß einem solche MCData-Dienste bereitstellenden 3GPP-LTE-Standard zur Verfügung stellt, umfassend:
Konfigurieren eines ersten MCData-Clients (15, 15ₐ) für die erste Signalisierungseinheit (6) und Registrieren des ersten MCData-Clients (15, 15ₐ) bei einem MCData-Server (14, 14ₐ) des Drahtlosnetzwerkes (3) für MCData-Short Data Service-, SDS, -Transfer;
Konfigurieren eines zweiten MCData-Clients (21, 21ₐ) für die zweite Signalisierungseinheit (18) und Registrieren des zweiten MCData-Clients (21, 21ₐ) bei dem MCData-Server (14, 14ₐ) für MCData-SDS-Transfer;
Empfanges einer Signalisierungsnachricht (19) von der ersten Signalisierungseinheit (6) im ersten MCData-Client (15, 15ₐ), wobei die Signalisierungsnachricht ein TCP-, UDP- oder SCTP-Paket ist;
im ersten MCData-Client (15, 15ₐ), Packen der Signalisierungsnachricht (19) in eine MCData-SDS-Nachricht (22, 22ₐ);
Senden der MCData-SDS-Nachricht (22, 22ₐ) vom ersten MCData-Client (15, 15ₐ) an den zweiten MCData-Client (21, 21ₐ) über den MCData-Server (14, 14ₐ);
Extrahieren der Signalisierungsnachricht (19) von der MCData-SDS-Nachricht (22, 22ₐ) im zweiten MCData-Client (21, 21ₐ); und
Senden der Signalisierungsnachricht (19) an die zweite Signalisierungseinheit (18).

2. Verfahren nach Anspruch 1, wobei die MCData-SDS-Nachricht (22) in einem MCData-Autosend-Modus vom ersten MCData-Client (15, 15ₐ) an den MCData-Server (14, 14ₐ) gesandt wird.

3. Verfahren nach Anspruch 1 oder 2, wobei die MCData-SDS-Nachricht (22, 22ₐ) in einem MCData-Autoreceive-Modus vom MCData-Server (14, 14ₐ) an den zweiten MCData-Client (21, 21ₐ) gesandt wird.

4. Verfahren nach einem der Ansprüche 1 bis 3, wobei die MCData-SDS-Nachricht (22, 22ₐ) in einem privaten Anrufmodus gesandt wird.

5. Verfahren nach einem der Ansprüche 1 bis 3, wobei die MCData-SDS-Nachricht (22, 22ₐ) in einem Gruppenanrufmodus an eine Vielzahl von zweiten MCData-Clients (21ₐ, 21_{b}) gesandt wird.

6. Verfahren nach einem der Ansprüche 1 bis 4, umfassend:
Konfigurieren eines weiteren ersten MCData-Clients (15_{b}) für die erste Signalisierungseinheit (6) und Registrieren des weiteren ersten MCData-Clients (15_{b}) bei dem MCData-Server (14) für MCData-SDS-Transfer;
Konfigurieren eines weiteren zweiten MCData-Clients (21_{b}) für die zweite Signalisierungseinheit (18) und Registrieren des weiteren zweiten MCData-Clients (21_{b}) bei dem MCData-Server (14) für MCData-SDS-Transfer;
Empfangen der Signalisierungsnachricht (19) von der ersten Signalisierungseinheit (6) auch im weiteren ersten MCData-Client (15_{b}) ;
im weiteren ersten MCData-Client (15_{b}), Packen der Signalisierungsnachricht (19) in eine weitere MCData-SDS-Nachricht (22_{b}) ;
Senden der weiteren MCData-SDS-Nachricht (22_{b}) vom weiteren ersten MCData-Client (15_{b}) an den weiteren zweiten MCData-Client (22_{b}) über den MCData-Server (14);
wenn eine der beiden MCData-SDS-Nachrichten (22ₐ, 22_{b}) nicht im jeweiligen zweiten MCData-Client (21ₐ, 21_{b}) empfangen wurde, Extrahieren der Signalisierungsnachricht (19) von der nicht-fehlgeschlagenen MCData-SDS-Nachricht (22ₐ, 22_{b}) zum Senden an die zweite Signalisierungseinheit (21_{b}).

7. Verfahren nach einem der Ansprüche 1 bis 4, umfassend:
Konfigurieren eines weiteren ersten MCData-Clients (15_{b}) für die erste Signalisierungseinheit (6) und Registrieren des weiteren ersten MCData-Clients (15_{b}) bei einem weiteren MCData-Server (14_{b}) für MCData-SDS-Transfer;
Konfigurieren eines weiteren zweiten MCData-Clients (21_{b}) für die zweite Signalisierungseinheit (18) und Registrieren des weiteren zweiten MCData-Clients (21_{b}) bei dem weiteren MCData-Server (14_{b}) für MCData-SDS-Transfer;
Empfangen der Signalisierungsnachricht (19) von der ersten Signalisierungseinheit (6) auch im weiteren ersten MCData-Client (15_{b}) ;
im weiteren ersten MCData-Client (15_{b}), Packen der Signalisierungsnachricht (19) in eine weitere MCData-SDS-Nachricht (22_{b});
Senden der weiteren MCData-SDS-Nachricht (22_{b}) vom weiteren ersten MCData-Client (15_{b}) an den weiteren zweiten MCData-Client (21_{b}) über den weiteren MCData-Server (14_{b});
wenn eine der beiden MCData-SDS-Nachrichten (22ₐ, 22_{b}) nicht im jeweiligen zweiten MCData-Client (21ₐ, 21_{b}) empfangen wurde, Extrahieren der Signalisierungsnachricht (19) von der nicht-fehlgeschlagenen MCData-SDS-Nachricht (22ₐ, 22_{b}) zum Senden an die zweite Signalisierungseinheit (18).

8. Verfahren nach Anspruch 6 oder 7, wobei die Signalisierungsnachricht (19) in der ersten Signalisierungseinheit (6) zum Senden an beide ersten MCData-Clients (15ₐ, 15_{b}) dupliziert wird.

9. Verfahren nach Anspruch 8, wobei die TCP-, UDP- oder SCTP-Signalisierungsnachricht (19) nach einem MPTCP-, MPUDP- bzw. MPSCTP-Standard dupliziert wird.

10. Verfahren nach einem der Ansprüche 1 bis 3, umfassend:
Konfigurieren eines weiteren ersten MCData-Clients (15_{b}) für die erste Signalisierungseinheit (6) und Registrieren des weiteren ersten MCData-Clients (15_{b}) bei dem MCData-Server (14, 14_{b}) für MCData-SDS-Transfer;
Konfigurieren eines weiteren zweiten MCData-Clients (21_{b}) für die zweite Signalisierungseinheit (18) und Registrieren des weiteren zweiten MCData-Clients (21_{b}) bei dem MCData-Server (14, 14_{b}) für MCData-SDS-Transfer;
Definieren einer Gruppe, die beide zweiten MCData-Clients (21ₐ, 21_{b}) als Teilnehmer enthält;
wobei die MCData-SDS-Nachricht (22) in einem Gruppenanrufmodus an alle Teilnehmer der Gruppe gesandt wird.

11. Verfahren nach Anspruch 10, wobei die Gruppe auch beide ersten MCData-Clients (15ₐ, 15_{b}) als Teilnehmer enthält und wobei, nach dem Empfangen der MCData-SDS-Nachricht (22) im weiteren MCData-Client (15_{b}), die MCData-SDS-Nachricht (22) in einem Gruppenanrufmodus nochmals an alle Teilnehmer der Gruppe gesandt wird.

12. Verfahren nach einem der Ansprüche 1 bis 11, wobei die erste Signalisierungseinheit (6) ein Onboard-Zug-Regler und die zweite Signalisierungseinheit (18) ein gleisseitiger Signalisierungsserver ist, oder umgekehrt.

## Revendications

1. Procédé de communication par Transmission Control Protocol, TCP, par User Datagram Protocol, UDP, ou par Stream Control Transmission Protocol, SCTP, entre deux entités de signalisation ferroviaires (6, 18) sur un réseau sans fil (3) qui procure des services de Mission Critical Data, MCData, selon un standard 3GPP LTE qui procure de tel services de MCData, comprenant :
la configuration d'un premier client MCData (15, 15ₐ) pour la première entité de signalisation (6) et l'enregistrement du premier client MCData (15, 15ₐ) avec un serveur MCData (14, 14ₐ) du réseau sans fil (3) pour un transfert de MCData Short Data Service, SDS ;
la configuration d'un second client MCData (21, 21ₐ) pour la seconde entité de signalisation (18) et l'enregistrement du second client MCData (21, 21ₐ) avec le serveur MCData (14, 14ₐ) pour un transfert de MCData SDS ;
la réception d'un message de signalisation (19) provenant de la première entité de signalisation (6) au niveau du premier client MCData (15, 15ₐ), le message de signalisation (19) étant un paquet TCP, UDP ou SCTP ;
au niveau du premier client MCData (15, 15ₐ), l'enveloppement du message de signalisation (19) dans un message MCData SDS (22, 22a) ;
l'envoi du message MCData SDS (22, 22ₐ) à partir du premier client MCData (15, 15ₐ) au second client MCData (21, 21ₐ) par le biais du serveur MCData (14, 14ₐ) ;
l'extraction du message de signalisation (19) du message MCData SDS (22, 22ₐ) au niveau du second client MCData (21, 21ₐ) ; et
l'envoi du message de signalisation (19) à la seconde entité de signalisation (18).

2. Procédé selon la revendication 1, dans lequel le message MCData SDS (22) est envoyé dans un mode d'envoi automatique de MCData à partir du premier client MCData (15, 15ₐ) au serveur MCData (14, 14ₐ).

3. Procédé selon la revendication 1 ou 2, dans lequel le message MCData SDS (22, 22ₐ) est envoyé dans un mode de réception automatique de MCData à partir du serveur MCData (14, 14ₐ) au second client MCData (21, 21ₐ).

4. Procédé selon l'une quelconque des revendications 1 à 3, dans lequel le message MCData SDS (22, 22ₐ) est envoyé dans un mode d'appel privé.

5. Procédé selon l'une quelconque des revendications 1 à 3, dans lequel le message MCData SDS (22) est envoyé dans un mode d'appels groupés à une pluralité de seconds clients MCData (21ₐ, 21_{b}).

6. Procédé selon l'une quelconque des revendications 1 à 4, comprenant :
la configuration d'un autre premier client MCData (15_{b}) pour la première entité de signalisation (6) et l'enregistrement de l'autre premier client MCData (15_{b}) avec le serveur MCData (14) pour un transfert de MCData SDS ;
la configuration d'un autre second client MCData (21_{b}) pour la seconde entité de signalisation (18) et l'enregistrement de l'autre second client MCData (21_{b}) avec le serveur MCData (14) pour un transfert de MCData SDS ;
la réception d'un message de signalisation (19) transmis par la première entité de signalisation (6) au niveau de l'autre premier client MCData (15_{b}) ;
au niveau de l'autre premier client MCData (15_{b}), l'enveloppement du message de signalisation (19) dans un autre message MCData SDS (22_{b}) ;
l'envoi de l'autre message MCData SDS (22_{b}) à partir de l'autre premier client MCData (15_{b}) à l'autre second client MCData (22_{b}) par le biais du serveur MCData (14) ;
si, soit l'un des deux messages MCData SDS (22ₐ, 22_{b}) a échoué d'être reçu au second client MCData (21ₐ, 21_{b}) respectif, l'extraction du message de signalisation (19) à partir du message MCData SDS (22ₐ, 22_{b}) non mis en échec pour l'envoi à la seconde entité de signalisation (21_{b}).

7. Procédé selon l'une quelconque des revendications 1 à 4, comprenant :
la configuration d'un autre premier client MCData (15_{b}) pour la première entité de signalisation (6) et l'enregistrement de l'autre premier client MCData (15_{b}) avec un autre serveur MCData (14_{b}) pour un transfert de MCData SDS ;
la configuration d'un autre second client MCData (21_{b}) pour la seconde entité de signalisation (18) et l'enregistrement de l'autre second client MCData (21_{b}) avec l'autre serveur MCData (14_{b}) pour un transfert de MCData SDS ;
la réception du message de signalisation (19) transmis par la première entité de signalisation (6) au niveau de l'autre premier client MCData (15_{b}) ;
au niveau de l'autre premier client MCData (15_{b}), l'enveloppement du message de signalisation (19) dans un autre message MCData SDS (22_{b}) ;
l'envoi de l'autre message MCData SDS (22_{b}) à partir de l'autre premier client MCData (15_{b}) à l'autre second client MCData (21_{b}) par le biais de l'autre serveur MCData (14_{b}) ;
si, soit l'un des deux messages MCData SDS (22ₐ, 22_{b}) a échoué d'être reçu au second client MCData (21ₐ, 21_{b}) respectif, l'extraction du message de signalisation (19) à partir du message MCData SDS (22ₐ, 22_{b}) non mis en échec pour l'envoi à la seconde entité de signalisation (18).

8. Procédé selon la revendication 6 ou 7, dans lequel le message de signalisation (19) est dupliqué dans la première entité de signalisation (6) pour son envoi à les deux premiers clients MCData (15ₐ, 15_{b}) .

9. Procédé selon la revendication 8, dans lequel le message de signalisation (19) par TCP, UDP ou SCTP est dupliqué selon un standard MPTCP, MPUDP ou MPSCTP, respectivement.

10. Procédé selon l'une quelconque des revendications 1 à 3, comprenant :
la configuration d'un autre premier client MCData (15_{b}) pour la première entité de signalisation (6) et l'enregistrement de l'autre premier client MCData (15_{b}) avec le serveur MCData (14, 14_{b}) pour un transfert de MCData SDS ;
la configuration d'un autre second client MCData (21_{b}) pour la seconde entité de signalisation (18) et l'enregistrement de l'autre second client MCData (21_{b}) avec le serveur MCData (14, 14_{b}) pour un transfert de MCData SDS ;
la définition d'un groupe contenant les deux seconds clients MCData (21ₐ, 21_{b}) en tant que membres ;
où le message MCData SDS (22) est envoyé dans un mode d'appels groupés à tous les membres du groupe.

11. Procédé selon la revendication 10, dans lequel le groupe contient également les deux premiers clients MCData (15ₐ, 15_{b}) en tant que membres et dans lequel, lors de la réception du message MCData SDS (22) au niveau de l'autre premier client MCData (15_{b}), le message MCData SDS (22) est renvoyé dans un mode d'appels groupés à tous les membres du groupe.

12. Procédé selon l'une quelconque des revendications 1 à 11, dans lequel la première entité de signalisation (6) est un dispositif de commande de train embarqué et la seconde entité de signalisation (18) est un serveur de signalisation du côté rail, ou vice versa.
